# EUROPEAN PATENT SPECIFICATION

(11) **EP 3 967 530 B1**
(45) Date of publication and mention of the grant of the patent: **01.11.2023**
(21) Application number: 21196713.8
(22) Date of filing: 14.09.2021
(51) Int. Cl.: B60H 1/00, F16L 3/10, F16L 3/237, F16L 55/035

(54) **VEHICLE AIR CONDITIONING DEVICE HOT WATER PIPE HOLDING STRUCTURE**
WARMWASSERROHRHALTESTRUKTUR FÜR EINE FAHRZEUGKLIMAANLAGE
STRUCTURE DE SUPPORT DE TUYAU D'EAU CHAUDE DE DISPOSITIF DE CLIMATISATION DE VÉHICULE

(30) Priority: 14.09.2020 JP 2020153541
(43) Date of publication of application: 16.03.2022
(73) Proprietor: Valeo Japan Co., Ltd, Kumagaya-shi, Saitama 360-0193 (JP)
(72) Inventor: DUTTA, Soumya, Kumagaya-shi, 360-0193 (JP); SUZUKI, Yukio, Kumagaya-shi, 360-0193 (JP)
(74) Representative: Valeo Systèmes Thermiques

(56) References cited:
- DE-A1- 19 853 150
- JP-A- 2014 162 378
- KR-A- 20150 132 633
- US-A- 5 234 185
- US-A1- 2004 069 480

## Description

### BACKGROUND OF THE INVENTION

### 1. Field of the Invention

The present invention relates to a holding structure of a hot water pipe that causes hot water to be circulated to a vehicle air conditioning device.

### 2. Description of the Related Art

A type of heater such that hot water fed from an engine room is supplied to a heater core disposed in a vehicle cabin, and the hot water is returned to the engine room after a heat exchange, is known as a heater of a vehicle air conditioning device. As existing technology relating to this kind of vehicle air conditioning device, there is technology disclosed in Patent Literature 1.

A vehicle air conditioning device disclosed in Patent Literature 1 has a case disposed in a vehicle cabin, a hot water supply pipe that can supply hot water to a heater core disposed inside the case, and a hot water collecting pipe that can collect hot water that has passed through an interior of the heater core. The hot water supply pipe and the hot water collecting pipe are held in front of the case by a sealing member holder.

Patent Literature 1: JP-A-2006-168608

As disclosed in Patent Literature 1, the hot water supply pipe and the hot water collecting pipe (hereafter collectively referred to as "hot water pipes") extend from an engine room to the vehicle cabin. A part that generates a large vibration, such as an engine, is housed in the engine room. In addition to this, vibration is also generated by the vehicle traveling. One portion of the vibration generated inside the engine room may be transmitted via the hot water pipes to the vehicle air conditioning device case or the like. There is concern that vibration transmitted to the case or the like will be transmitted to an occupant as an unpleasant noise.

A further water pipe holding structure is disclosed in JP 2014 162378 A.

### SUMMARY OF THE INVENTION

An object of the invention is to increase quietness in a vehicle cabin of a vehicle air conditioning device having a hot water pipe.

In the following description, reference signs from the attached drawings are added in parentheses in order to facilitate understanding of the invention, but the invention is not thereby limited to aspects shown in the drawings.

The present invention provides a vehicle air conditioning device hot water pipe holding structure according to claim 1.

According to the invention, quietness in a vehicle cabin of a vehicle air conditioning device having a hot water pipe can be increased.

The invention also relates to a vehicle air conditioning system comprising a vehicle air conditioning device hot water pipe holding structure described above, and to a vehicle comprising such vehicle air conditioning system.

### BRIEF DESCRIPTION OF THE DRAWINGS

Fig. 1 is a perspective view of a vehicle air conditioning device according to a first comparative working example.
Fig. 2 is an exploded perspective view of a holder member and hot water pipes shown in Fig. 1.
Fig. 3 is a sectional view of a state wherein the holder member and the hot water pipes shown in Fig. 2 are attached to a dash panel as seen from above.
Fig. 4A is a sectional view of a state wherein the holder member and a hot water collecting pipe shown in Fig. 2 are attached to a dash panel as seen from a left side, and Fig. 4B is an enlarged view of a portion 4B of Fig. 4A.
Fig. 5 is a sectional view of a state wherein a holder member and a hot water collecting pipe of a vehicle air conditioning device according to a second comparative working example are attached to a dash panel as seen from a left side.
Fig. 6 is an exploded perspective view of a holder member and hot water pipes of a vehicle air conditioning device according to a third working example according to the invention.
Fig. 7 is a sectional view of a state wherein the holder member and a hot water collecting pipe of the vehicle air conditioning device according to the third working example are attached to a dash panel as seen from a left side.

### DESCRIPTION OF THE PREFERRED EMBODIMENTS

Hereafter, an embodiment of the invention will be described based on the attached drawings. Fr in the drawings indicates a front with respect to a direction of travel of a vehicle, Rr represents a rear with respect to the direction of travel of the vehicle, Le indicates left as seen by an occupant, Ri indicates right as seen by the occupant, Up indicates up, and Dn indicates down.

### First Working Example, not according to the invention:

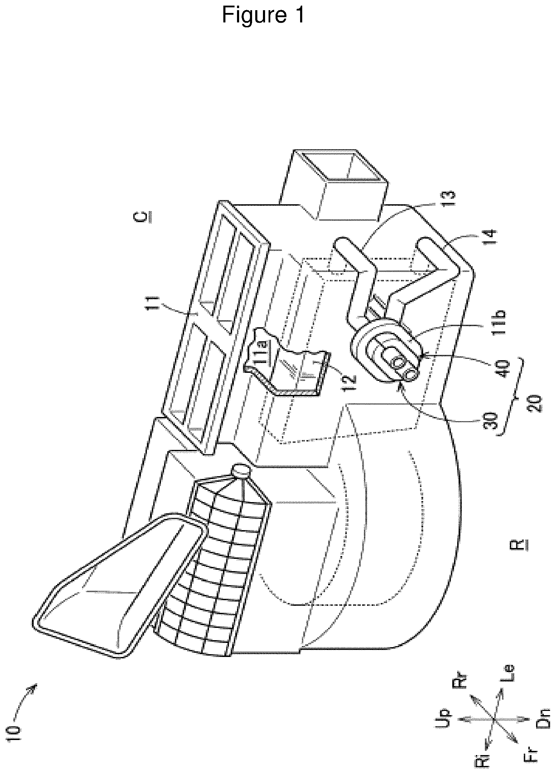

Reference will be made to Fig. 1. A vehicle air conditioning device 10 (hereafter written as "air conditioning device 10") is shown in Fig. 1. A main portion of the air conditioning device 10 is disposed inside a vehicle cabin C in which an occupant rides. A forward compartment R in which an engine is housed is formed in front of the air conditioning device 10. The vehicle cabin C and the front compartment R are divided by a dash panel, which is a plate-form member. The dash panel will be described hereafter.

When an engine is housed, the forward compartment R is a region generally called an engine room. As a vehicle in which the air conditioning device 10 is mounted is not limited to being a vehicle having an engine as a power source, the term "forward compartment R" is used.

The air conditioning device 10 has a case 11 wherein air is fed into an internal space 11a, a heater core 12, disposed in the internal space 11a, for warming air that has been fed in, a hot water supply pipe 13 that is connected to the heater core 12 from an exterior of the case 11 and can supply hot water to the heater core 12, a hot water collecting pipe 14 that is connected from the heater core 12 to the exterior of the case 11 and can collect hot water that has passed through an interior of the heater core 12, and a holder member 20 that holds the hot water supply pipe 13 and the hot water collecting pipe 14. Hereafter, the hot water supply pipe 13 and the hot water collecting pipe 14 may be referred to collectively as "hot water pipes 13 and 14".

The case 11 has a protruding portion 11b that protrudes toward the holder member 20. A front end of the protruding portion 11b is raised along a rear face of the holder member 20. In addition to the heater core 12, commonly known parts such as a scroll fan for carrying out air feeding and an evaporator for cooling air that has been fed in are housed in the case 11. Air whose temperature has been regulated in an interior of the case 11 is fed to the vehicle cabin C, thereby regulating the inside of the vehicle cabin C to an appropriate temperature.

The internal space 11a is formed in a cavity form, and configures one portion of an air flow path.

The heater core 12 is a commonly known heater core having a large number of tubes through whose interiors hot water flows, is configured of a metal such as an aluminum alloy, and heats air that has been fed in using heat of the hot water.

The hot water pipes 13 and 14 are both pipe-form members made of metal. As a difference in volume before and after a heat exchange is small, the hot water pipes 13 and 14 are both of the same diameter. The hot water pipes 13 and 14 can also be configured of another material, such as a resin, and can be of differing diameters.

The hot water supply pipe 13, for example, supplies hot water warmed in an engine to the heater core 12, and the hot water collecting pipe 14 returns the hot water to the engine after a heat exchange is finished in the heater core 12. The hot water returned to the engine is warmed when cooling the engine, and one portion or a whole thereof is supplied to the heater core 12 again.

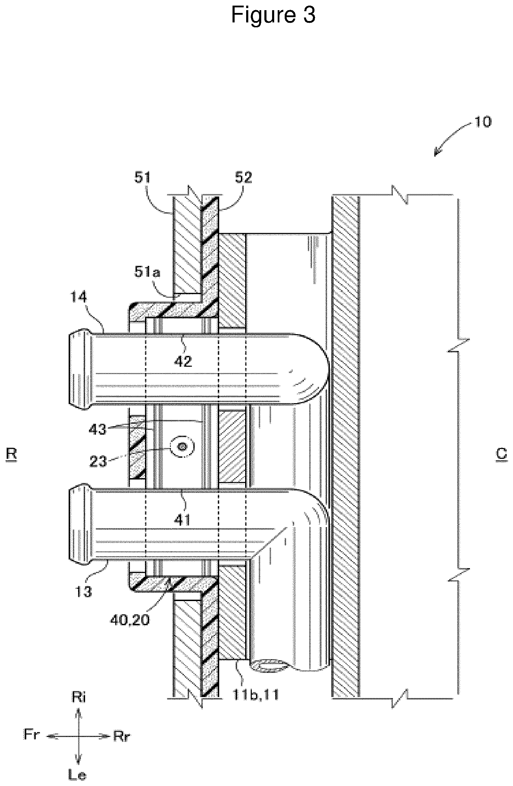

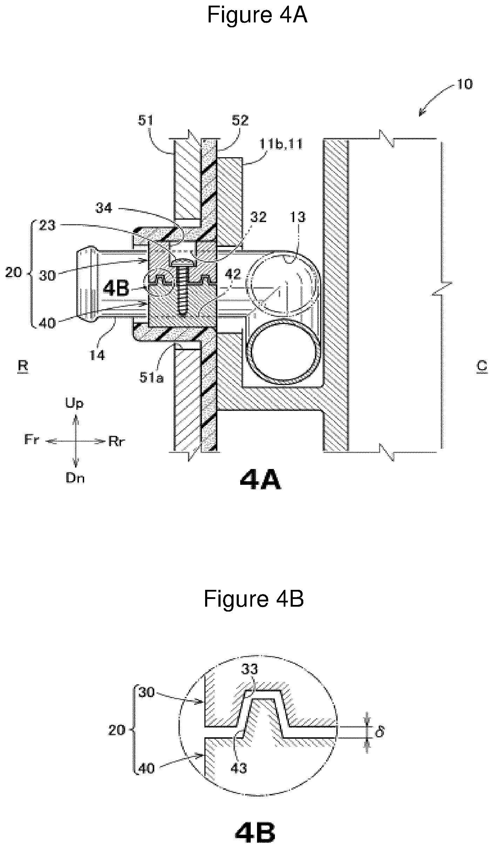

Reference will be made to Fig. 3 and Fig. 4A. The hot water pipes 13 and 14 are disposed in such a way as to pass through holes provided in the protruding portion 11b of the case, and not come into contact with the protruding portion 11b. This is because when the hot water pipes 13 and 14 come into contact with the protruding portion 11b, vibration received by the hot water pipes 13 and 14 in the forward compartment R is transmitted to the case 11 via the protruding portion 11b, which is undesirable.

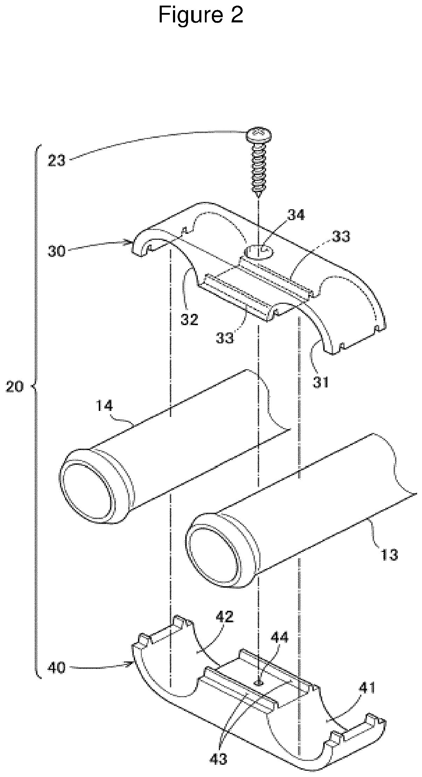

Reference will be made to Fig. 2. The holder member 20 has a first holding portion 30 that comes into contact with an upper half periphery of each of the hot water pipes 13 and 14, a second holding portion 40 that opposes the first holding portion 30 and comes into contact with a lower half periphery of each of the hot water pipes 13 and 14, and a fastening portion 23 that fastens the first holding portion 30 and the second holding portion 40.

Reference will be made to Fig. 3 and Fig. 4A. The holder member 20 faces a panel hole 51a provided in the dash panel 51. An outer peripheral edge of the holder member 20 is of an elliptical form whose major axis extends from lower right to upper left along an inner peripheral face of the panel hole 51a (refer also to Fig. 1).

A grommet 52 of a rubber material for shock absorption is provided between the dash panel 51 and the holder member 20. One portion of the grommet 52 faces an interior of the panel hole 51a. A front face and an outer peripheral face of the holder member 20 are enclosed by the grommet 52, and a rear face is covered by the protruding portion 11b.

Reference will be made to Fig. 2. The first holding portion 30 is a member for which a metal (for example, an iron-based material) is used as a material. The first holding portion 30 has a first supply side holding portion 31, which presents an approximate U-form following an outer peripheral face of the hot water supply pipe 13 and holds the hot water supply pipe 13, a first collection side holding portion 32, which presents an approximate U-form following an outer peripheral face of the hot water collecting pipe 14 and holds the hot water collecting pipe 14, a recessed portion 33, which is formed in a concave form facing upward and extends horizontally, and a fastening portion through hole 34, whose inner diameter is greater than an outer diameter of the fastening portion 23 and through which the fastening portion 23 passes.

The second holding portion 40 is a member for which a metal (for example, an iron-based material) is used as a material. The second holding portion 40 has a second supply side holding portion 41, which presents an approximate U-form following the outer peripheral face of the hot water supply pipe 13 and holds the hot water supply pipe 13, a second collection side holding portion 42, which presents an approximate U-form following the outer peripheral face of the hot water collecting pipe 14 and holds the hot water collecting pipe 14, a protruding portion 43, which protrudes toward the recessed portion 33 in a position coinciding with the recessed portion 33, and a fastening hole 44, in which a leading end of the fastening portion 23 is fastened.

A metal such as aluminum, a resin, or the like can also be employed as a material of the first holding portion 30 and the second holding portion 40. Materials differing between the first holding portion 30 and the second holding portion 40 can also be employed.

Reference will also be made to Fig. 4B. The second holding portion 40 is provided opposing the first holding portion 30 across a gap δ. In other words, the first holding portion 30 and the second holding portion 40 are fastened to each other in a state wherein a predetermined gap is provided.

A dimensional error occurs within a predetermined range in each of the first holding portion 30, the second holding portion 40, the hot water supply pipe 13, and the hot water collecting pipe 14. A dimension of each part is set in such a way that even in a provisional case wherein errors in the first holding portion 30 and the second holding portion 40 are the greatest among possible errors, and errors in the hot water supply pipe 13 and the hot water collecting pipe 14 are the smallest among possible errors, a gap occurs between the first holding portion 30 and the second holding portion 40.

Reference will be made to Fig. 2. The fastening portion 23 is configured of a self-tapping screw, and is provided between the hot water supply pipe 13 and the hot water collecting pipe 14. Other than a screw, a bolt or the like can also be used, provided that the fastening portion 23 can fasten the first holding portion 30 and the second holding portion 40.

The first supply side holding portion 31 encloses an upper portion of the hot water supply pipe 13 over approximately half the periphery. More precisely, the first supply side holding portion 31 covers a length slightly less than that of the upper half periphery of the hot water supply pipe 13, with a circumferential direction as a reference.

The first collection side holding portion 32 encloses an upper portion of the hot water collecting pipe 14 over approximately half the periphery. More precisely, the first collection side holding portion 32 covers a length slightly less than that of the upper half periphery of the hot water collecting pipe 14, with a circumferential direction as a reference.

The recessed portion 33 is formed extending to both left and right ends of a lower face of the first holding portion 30, except in a region in which the first supply side holding portion 31 is formed and a region in which the first collection side holding portion 32 is formed. The recessed portion 33 is formed in two places, to the front and the rear. An arrangement can also be such that a direction in which the recessed portion 33 extends follows a direction in which the panel hole 51a (refer to Fig. 3) extends.

The second supply side holding portion 41 encloses a lower portion of the hot water supply pipe 13 over approximately half the periphery. More precisely, the second supply side holding portion 41 covers a length slightly less than that of the lower half periphery of the hot water supply pipe 13, with the circumferential direction as a reference.

The second collection side holding portion 42 encloses a lower portion of the hot water collecting pipe 14 over approximately half the periphery. More precisely, the second collection side holding portion 42 covers a length slightly less than that of the lower half periphery of the hot water collecting pipe 14, with the circumferential direction as a reference.

The protruding portion 43 is formed extending to both left and right ends of an upper face of the second holding portion 40, except in a region in which the second supply side holding portion 41 is formed and a region in which the second collection side holding portion 42 is formed. The protruding portion 43 is formed in two places, to the front and the rear. An arrangement can also be such that a direction in which the protruding portion 43 extends follows the direction in which the panel hole 51a (refer to Fig. 3) extends.

By each of the first supply side holding portion 31 and the second supply side holding portion 41 enclosing approximately a half periphery of the hot water supply pipe 13, approximately a whole periphery of the hot water supply pipe 13 is enclosed by the first supply side holding portion 31 and the second supply side holding portion 41.

Also, by each of the first collection side holding portion 32 and the second collection side holding portion 42 enclosing approximately a half periphery of the hot water collecting pipe 14, approximately a whole periphery of the hot water collecting pipe 14 is enclosed by the first collection side holding portion 32 and the second collection side holding portion 42.

A configuration may also be such that a protruding portion is formed in the first holding portion 30 and a recessed portion is formed in the second holding portion 40. Also, a configuration may be such that the recessed portion 33 is formed in a front portion of the first holding portion 30 and a protruding portion is formed in a rear portion, while the protruding portion 43 is formed in a front portion of the second holding portion 40 and a recessed portion is formed in a rear portion. Furthermore, the recessed portions and the protruding portions may be formed in reverse front and rear.

The heretofore described air conditioning device 10 achieves the following advantages.

Reference will be made to Fig. 4A and Fig. 4B. The first holding portion 30 and the second holding portion 40 are disposed across a gap, and fastened using the fastening portion 23. Assuming a case of adopting a setting wherein the first holding portion 30 and the second holding portion 40 are brought into close contact, a gap occurs between the hot water pipes 13 and 14 and the holder member 20 when either of the hot water pipes 13 and 14 is smaller due to a dimensional error, and the hot water pipes 13 and 14 cannot be held strongly. By fastening using the fastening portion 23, leaving a gap, the holder member 20 can be reliably fastened to the hot water supply pipe 13 and the hot water collecting pipe 14, even when there is dimensional variation in each of the holder member 20, the hot water supply pipe 13, and the hot water collecting pipe 14. Reference will be made to Fig. 1. By the hot water supply pipe 13 and the hot water collecting pipe 14 being held integrally, an apparent mass is increased, and a transmission of vibration to the case 11 and the like can be restricted. Because of this, the air conditioning device 10 having the hot water pipes 13 and 14 is such that quietness inside the vehicle cabin C can be increased.

Reference will be made to Fig. 2 and Fig. 4A. Approximately the whole periphery of the hot water supply pipe 13 is enclosed by the first supply side holding portion 31 and the second supply side holding portion 41, and approximately the whole periphery of the hot water collecting pipe 14 is enclosed by the first collection side holding portion 32 and the second collection side holding portion 42. By the hot water supply pipe 13 and the hot water collecting pipe 14 being held over approximately the whole periphery, the hot water supply pipe 13 and the hot water collecting pipe 14 can be held with greater strength.

The fastening portion 23 is provided between the hot water supply pipe 13 and the hot water collecting pipe 14. Both the hot water supply pipe 13 and the hot water collecting pipe 14 can be more reliably held, in addition to which the holder member 20 can be compact.

Reference will be made to Fig. 4A and Fig. 4B. The second holding portion 40 has the protruding portion 43, which protrudes toward the first holding portion 30 and extends in the direction in which the panel hole 51a extends (an approximately horizontal direction of the vehicle) . Also, the first holding portion 30 has the recessed portion 33, which covers the protruding portion 43. By adopting a labyrinth structure, noise from the forward compartment R is restricted from being transmitted into the vehicle cabin C, and the inside of the vehicle cabin C can be rendered quiet. The same advantage can be obtained when the first holding portion 30 has a protruding portion and the second holding portion 40 has a recessed portion.

A metal is used as a material of the first holding portion 30 and the second holding portion 40. The apparent mass is increased, and transmission of vibration can be further restricted. This advantage is achieved by a metal being used as a material of at least one of the first holding portion 30 and the second holding portion 40. When a metal is used as a material of both the first holding portion 30 and the second holding portion 40, mass can be particularly increased, which is preferable.

### Second Working Example, not according to the invention.

Next, an air conditioning device 10A according to a second working example will be described, based on the drawings.

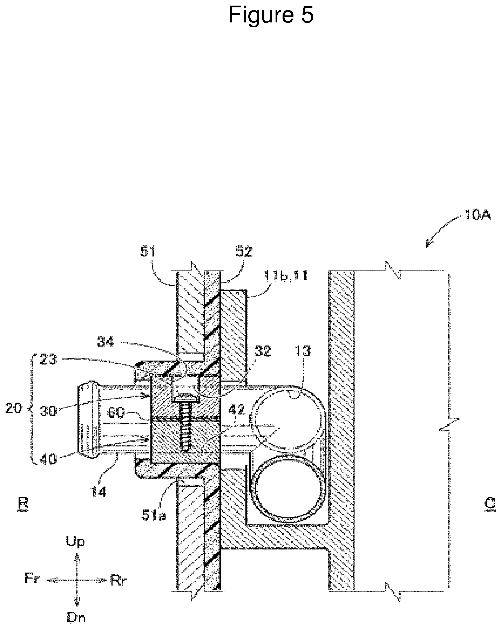

Fig. 5 is represented to correspond to Fig. 4A. The air conditioning device 10A according to the second working example is such that a sound insulating member 60 is sandwiched between the first holding portion 30 and the second holding portion 40 instead of the recessed portion 33 (refer to Fig. 4B) and the protruding portion 43 (refer to Fig. 4B). Other basic configurations are the same as those of the air conditioning device 10 according to the first working example (refer to Fig. 1). With regard to portions the same as those in the first working example, the same reference signs will be allotted, and a detailed description will be omitted.

The lower face of the first holding portion 30 is formed to be flat, and the upper face of the second holding portion 40 is also formed to be flat.

The sound insulating member 60 can be configured of a plate in which a material having excellent elasticity, such as rubber, is used, or of an adhesive or the like with which a gap formed between the first holding portion 30 and the second holding portion 40 is filled.

For example, when the sound insulating member 60 is configured of a plate made of rubber, the hot water pipes 13 and 14 can be held with sufficient strength by fastening the fastening portion 23 while causing the sound insulating member 60 to distort.

Also, when the sound insulating member 60 is configured by filling with an adhesive or the like, firstly, the first holding portion 30 and the second holding portion 40 are fastened using the fastening portion 23, attaining a state wherein the first holding portion 30 and the second holding portion 40 are held with sufficient strength. Subsequently, a gap between the first holding portion 30 and the second holding portion 40 is filled with an adhesive. Alternatively, using an adhesive that gradually hardens with the passing of time, the gap between the first holding portion 30 and the second holding portion 40 may firstly be filled with the adhesive, and the first holding portion 30 and the second holding portion 40 fastened using the fastening portion 23 while an elastic force of the adhesive remains. In this case, an epoxy-based resin or the like can be utilized as the adhesive.

The heretofore described hot water pipe holding structure also achieves predetermined advantages of the invention.

In addition, the sound insulating member 60 is sandwiched by the first holding portion 30 and the second holding portion 40. Noise from the forward compartment R is restricted from being transmitted into the vehicle cabin C, and the inside of the vehicle cabin C can be rendered quiet.

### Third Working Example according to the invention.

Next, an air conditioning device 10B according to a third working example will be described, based on the drawings. A basic configuration relating to the air conditioning device 10B according to the third working example is the same as that of the air conditioning devices 10 and 10A according to the first working example and/or the second working example. With regard to portions the same as those in the first working example and/or the second working example, the same reference signs will be allotted, and a detailed description will be omitted.

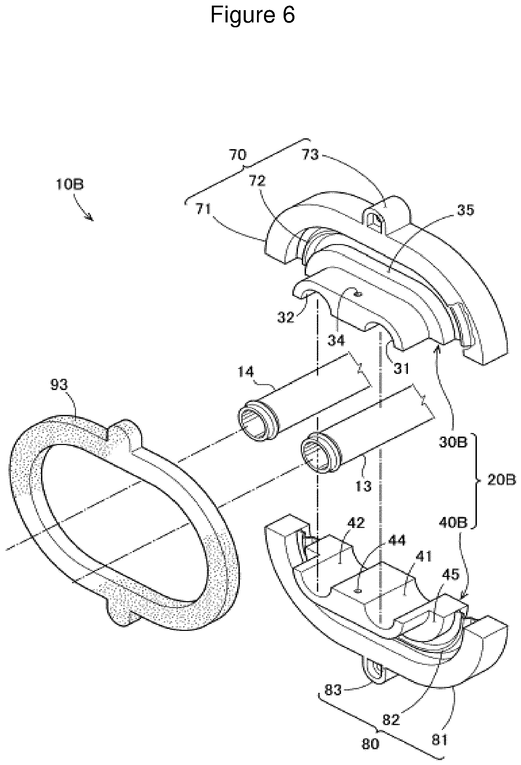

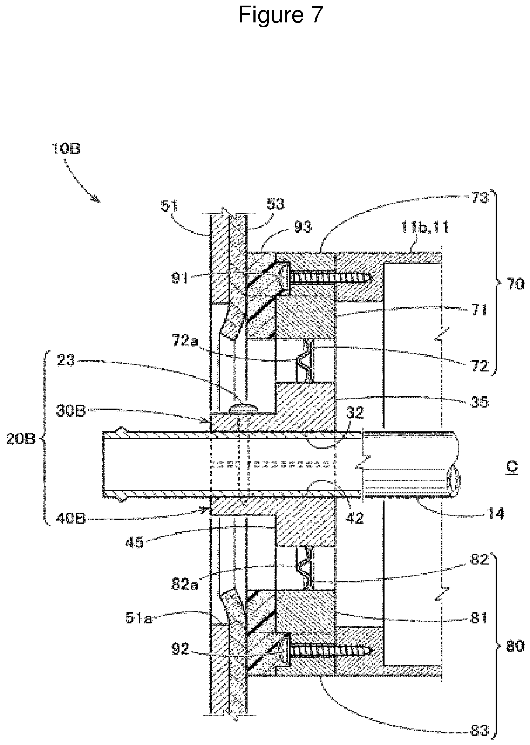

Reference will be made to Fig. 6 and Fig. 7. A holder member 20B configuring one portion of the air conditioning device 10B is such that a first vibration restricting portion 70, which restricts a transmission of vibration from a first holding portion 30B to the case 11, is provided between the case 11 and the first holding portion 30B, and a second vibration restricting portion 80, which restricts a transmission of vibration from a second holding portion 40B to the case 11, is provided between the case 11 and the second holding portion 40B.

The first holding portion 30B is such that in addition to the first supply side holding portion 31, the first collection side holding portion 32, and the fastening portion through hole 34, a first coupling portion 35 to be coupled to the first vibration restricting portion 70 is formed integrally. The first coupling portion 35 is formed offset to the rear of the fastening portion through hole 34, with a direction following axial lines of the hot water supply pipe 13 and the hot water collecting pipe 14 as a reference. Also, a volume of the first coupling portion 35 is preferably greater than a volume of a region in which the fastening portion through hole 34 is formed. This is because after the two hot water pipes 13 and 14 are fastened, an anti-vibration advantage can be increased with respect to input vibration.

The second holding portion 40B is such that in addition to the second supply side holding portion 41, the second collection side holding portion 42, and the fastening hole 44, a second coupling portion 45 to be coupled to the second vibration restricting portion 80 is formed integrally. The second coupling portion 45 is formed offset to the rear of the fastening hole 44, with a direction following the axial lines of the hot water supply pipe 13 and the hot water collecting pipe 14 as a reference. Also, a volume of the second coupling portion 45 is preferably greater than a volume of a region in which the fastening hole 44 is formed. This is because after the two hot water pipes 13 and 14 are fastened, an anti-vibration advantage can be increased with respect to input vibration.

The first coupling portion 35 and the second coupling portion 45 may also be formed to the front of the fastening portion through hole 34 and the fastening hole 44.

The first vibration restricting portion 70 has a first fixed portion 71, which is configured of a rigid body and fixed to the case 11, a first elastic portion 72, which couples the first fixed portion 71 and the first holding portion 30B and has greater elasticity than the first fixed portion 71, and a first case fastening portion 73, which is formed integrated with the first fixed portion 71 and is for fastening a fastening member 91 for fixing to the case 11.

Polypropylene, for example, can be used as a material of the first fixed portion 71. Also, an ethylene propylene diene monomer rubber (EPDM) can be used as a material of the first elastic portion 72. The first elastic portion 72 can also be said to be a region for restricting a transmission of vibration from the first holding portion 30B to the case 11.

The first elastic portion 72 is formed in a mountain-like form facing forward, and has a first displacement absorbing portion 72a that can absorb a displacement of a length from the first holding portion 30B to the first fixed portion 71 by distorting.

The second vibration restricting portion 80 has a second fixed portion 81, which is configured of a rigid body and fixed to the case 11, a second elastic portion 82, which couples the second fixed portion 81 and the second holding portion 40B and has greater elasticity than the second fixed portion 81, and a second case fastening portion 83, which is formed integrated with the second fixed portion 81 and is for fastening the fastening member 91 for fixing to the case 11.

Polypropylene, for example, can be used as a material of the second fixed portion 81. Also, an ethylene propylene diene monomer rubber (EPDM) can be used as a material of the second elastic portion 82. The second elastic portion 82 can also be said to be a region for restricting a transmission of vibration from the second holding portion 40B to the case 11. The second elastic portion 82 is formed in a mountain-like form facing forward, and has a second displacement absorbing portion 82a that can absorb a displacement of a length from the second holding portion 40B to the second fixed portion 81 by distorting.

The first holding portion 30B, the first fixed portion 71, and the first elastic portion 72 are formed integrally using two-color molding. Also, the second holding portion 40B, the second fixed portion 81, and the second elastic portion 82 are formed integrally using two-color molding.

A shock-absorbing member 93, which is a sponge-form member and restricts a transmission of vibration from the dash panel 51 to the case 11, is disposed between felt 53, which acts as a vehicle-side member provided in close contact with the dash panel 51, and the first vibration restricting portion 70, and between the felt 53 and the second vibration restricting portion 80.

The vibration restricting portions 70 and 80 can also be configured of only the elastic portions 72 and 82 respectively, with the elastic portions 72 and 82 being fastened directly to the case 11. Also, the material of the first fixed portion 71 and the second fixed portion 81 not being limited to polypropylene, nylon 6-6 or another resin can also be selected. Also, the material of the first elastic portion 72 and the second elastic portion 82 not being limited to ethylene propylene diene monomer rubber, hydrogenated nitrile rubber or another soft resin can be used, or the first elastic portion 72 and the second elastic portion 82 can be configured by forming a resin sheet into a bellows form.

Furthermore, the displacement absorbing portions 72a and 82a may be formed in a trough form facing rearward. Also, a transmission of vibration can also be restricted using material elasticity, without providing the displacement absorbing portions 72a and 82a in the elastic portions 72 and 82 respectively. When the displacement absorbing portions 72a and 82a are provided, an amount of displacement of the elastic portions 72 and 82 can be further increased, and vibration transmission can be further restricted.

The heretofore described hot water pipe holding structure also achieves predetermined advantages of the invention.

The first vibration restricting portion 70 is provided between the case 11 and the first holding portion 30B, and the second vibration restricting portion 80 is provided between the case 11 and the second holding portion 40B. Because of this, vibration can be restricted from being transmitted to the case 11 via the first holding portion 30B and the second holding portion 40B. Because of this, the air conditioning device 10B having the hot water pipes 13 and 14 is such that quietness inside the vehicle cabin C can be further increased.

The first vibration restricting portion 70 has the first fixed portion 71, which is configured of a rigid body, and the first elastic portion 72, which has greater elasticity than the first fixed portion 71. Also, the second vibration restricting portion 80 has the second fixed portion 81, which is configured of a rigid body, and the second elastic portion 82, which has greater elasticity than the second fixed portion 81. By the fixed portions 71 and 81 configured of rigid bodies being fixed to the case 11, an increase in a lifespan of a fixed region can be achieved.

The first holding portion 30B, the first fixed portion 71, and the first elastic portion 72 are formed integrally, and the second holding portion 40B, the second fixed portion 81, and the second elastic portion 82 are formed integrally. Because of this, work of attaching the holding portions 30B and 40B to the hot water supply pipe 13 and the hot water collecting pipe 14 respectively can be carried out easily.

A vehicle air conditioning device hot water pipe holding structure according to the invention is not limited to the one shown in the third working example.

Provided that the effects and the advantages of the invention are achieved, the invention is not limited to the working example.

The vehicle air conditioning device hot water pipe holding structure according to the invention is suitable in a vehicle in which an engine is used as a power source. Description of Reference Numerals and Signs

10, 10A, 10B: vehicle air conditioning device
11 case, 11a: internal space
12: heater core
13: hot water supply pipe
14: hot water collecting pipe
20, 20B: holder member
30, 30B: first holding portion
31: first supply side holding portion
32: first collection side holding portion
33: recessed portion
40, 40B: second holding portion
41: second supply side holding portion
42: second collection side holding portion
43: protruding portion
51: dash panel, 51a panel hole
60: sound insulating member
70: first vibration restricting portion
71: first fixed portion
72: first elastic portion
80: second vibration restricting portion
81: second fixed portion
82: second elastic portion
C: vehicle cabin
R: forward compartment

## Claims

1. A vehicle air conditioning device hot water pipe holding structure, comprising:
a case (11), disposed inside a vehicle cabin (C) separated from a forward compartment (R) by a dash panel (51), in which an internal space (11a) is formed;
a heater core (12) that is disposed in the internal space (11a) and can warm air that flows into the internal space (11a);
a hot water supply pipe (13) that is provided in an exterior of the case (11) and can supply hot water to the heater core (12);
a hot water collecting pipe (14) that is provided in an exterior of the case (11) and can collect hot water that has passed through an interior of the heater core (12); and
a holder member (20, 20B) that holds the hot water supply pipe (13) and the hot water collecting pipe (14), wherein
the holder member (20, 20B) has a first holding portion (30, 30B) that comes into contact with the hot water supply pipe (13) and the hot water collecting pipe (14), a second holding portion (40, 40B) that opposes the first holding portion (30, 30B), is provided across a gap, and comes into contact with the hot water supply pipe (13) and the hot water collecting pipe (14), and a fastening portion (23) that fastens the first holding portion (30, 30B) and the second holding portion (40, 40B),
the first holding portion (30, 30B) has a first supply side holding portion (31) that presents an approximate U-form following an outer peripheral face of the hot water supply pipe (13) and holds the hot water supply pipe (13), and a first collection side holding portion (32) that presents an approximate U-form following an outer peripheral face of the hot water collecting pipe (14) and holds the hot water collecting pipe (14), and
the second holding portion (40, 40B) has a second supply side holding portion (41) that presents an approximate U-form following an outer peripheral face of the hot water supply pipe (13) and holds the hot water supply pipe (13), and a second collection side holding portion (42) that presents an approximate U-form following an outer peripheral face of the hot water collecting pipe (14) and holds the hot water collecting pipe (14),
**characterized in that** the device comprises: T
a first vibration restricting portion (70) that restricts a transmission of vibration from the first holding portion (30B) to the case (11) is provided between the case (11) and the first holding portion (30B), and
a second vibration restricting portion (80) that restricts a transmission of vibration from the second holding portion (40B) to the case (11) is provided between the case (11) and the second holding portion (40B),
and wherein
the first vibration restricting portion (70) has a first fixed portion (71) that is configured of a rigid body and is fixed to the case (11), and a first elastic portion (72) that couples the first fixed portion (71) and the first holding portion (30B) and has greater elasticity than the first fixed portion (71), and
the second vibration restricting portion (80) has a second fixed portion (81) that is configured of a rigid body and is fixed to the case (11), and a second elastic portion (82) that couples the second fixed portion (81) and the second holding portion (40B) and has greater elasticity than the second fixed portion (81).

2. The vehicle air conditioning device hot water pipe holding structure according to claim 1, wherein
approximately a whole periphery of the hot water supply pipe (13) is enclosed by the first supply side holding portion (31) and the second supply side holding portion (41), and
approximately a whole periphery of the hot water collecting pipe (14) is enclosed by the first collection side holding portion (32) and the second collection side holding portion (42) .

3. The vehicle air conditioning device hot water pipe holding structure according to claim 1 or claim 2, wherein
the fastening portion (23) is provided between the hot water supply pipe (13) and the hot water collecting pipe (14) .

4. The vehicle air conditioning device hot water pipe holding structure according to any one of claim 1 to 3, wherein
the first holding portion (30B), the first fixed portion (71), and the first elastic portion (72) are formed integrally, and
the second holding portion (40B), the second fixed portion (81), and the second elastic portion (82) are formed integrally.

5. The vehicle air conditioning device hot water pipe holding structure according to any one of claim 1 to claim 4, wherein
the holder member (20, 20B) faces a panel hole (51a) opened in the dash panel (51),
either one of the first holding portion (30, 30B) and the second holding portion (40, 40B) has a protruding portion (43) that protrudes toward the other one and extends in a direction in which the panel hole (51a) extends, and
the other one of the first holding portion (30, 30B) and the second holding portion (40, 40B) has a recessed portion (33) that covers the protruding portion (43).

6. The vehicle air conditioning device hot water pipe holding structure according to any one of claim 1 to claim 3, wherein
the holder member (20, 20B) faces a panel hole (51a) opened in the dash panel (51), and
a sound insulating member (60) that restricts sound from passing through the gap is sandwiched by the first holding portion (30, 30B) and the second holding portion (40, 40B).

7. The vehicle air conditioning device hot water pipe holding structure according to any one of claim 1 to claim 6, wherein a metal is used as a material of at least one of the first holding portion (30, 30B) and the second holding portion (40, 40B) .

8. A vehicle air conditioning system comprising a vehicle air conditioning device hot water pipe holding structure according to any one of the preceding claims.

9. A Vehicle comprising a vehicle air conditioning system according the preceding claim.

## Patentansprüche

1. Warmwasserrohrhaltestruktur für eine Fahrzeugklimaanlage, die Folgendes umfasst:
ein Gehäuse (11), angeordnet im Inneren einer Fahrzeugkabine (C), von einem vorderen Bereich (R) durch eine Trennwand (51) getrennt, in der ein innerer Raum (11a) gebildet ist;
einen Heizungswärmetauscher (12), der in dem inneren Raum (11a) angeordnet ist und Luft, die in den inneren Raum (11a) strömt, wärmen kann;
ein Warmwasserzufuhrrohr (13), das außerhalb des Gehäuses (11) bereitgestellt ist und Warmwasser zum Heizungswärmetauscher (12) zuführen kann;
ein Warmwassersammelrohr (14), das außerhalb des Gehäuses (11) bereitgestellt ist und Warmwasser sammeln kann, das ein Inneres des Heizungswärmetauschers (12) durchströmt hat; und
ein Halterelement (20, 20B), das das Warmwasserzufuhrrohr (13) und das Warmwassersammelrohr (14) hält, wobei
das Halterelement (20, 20B) einen ersten Halteteil (30, 30B), der mit dem Warmwasserzufuhrrohr (13) und dem Warmwassersammelrohr (14) in Kontakt kommt, einen zweiten Halteteil (40, 40B), der dem ersten Halteteil (30, 30B) gegenüberliegt, über einem Spalt bereitgestellt ist und mit dem Warmwasserzufuhrrohr (13) und dem Warmwassersammelrohr (14) in Kontakt kommt, und einen Befestigungsteil (23), der den ersten Halteteil (30, 30B) und den zweiten Halteteil (40, 40B) befestigt, aufweist, wobei der erste Halteteil (30, 30B) einen ersten zufuhrseitigen Halteteil (31), der eine angenäherte U-Form anschließend an eine äußere umlaufende Fläche des Warmwasserzufuhrrohrs (13) zeigt und das Warmwasserzufuhrrohr (13) hält, und einen ersten sammelseitigen Halteteil (32), der eine angenäherte U-Form anschließend an eine äußere umlaufende Fläche des Warmwassersammelrohrs (14) zeigt und das Warmwassersammelrohr (14) hält, aufweist, und
wobei der zweite Halteteil (40, 40B) einen zweiten zufuhrseitigen Halteteil (41), der eine angenäherte U-Form anschließend an eine äußere umlaufende Fläche des Warmwasserzufuhrrohrs (13) zeigt und das Warmwasserzufuhrrohr (13) hält, und einen zweiten sammelseitigen Halteteil (42), der eine angenäherte U-Form anschließend an eine äußere umlaufende Fläche des Warmwassersammelrohrs (14) zeigt und das Warmwassersammelrohr (14) hält, aufweist,
**dadurch gekennzeichnet, dass** die Vorrichtung Folgendes umfasst:
einen ersten Vibrationseinschränkungsteil (70), der eine Übertragung von Vibrationen vom ersten Halteteil (30B) auf das Gehäuse (11) einschränkt, der zwischen dem Gehäuse (11) und dem ersten Halteteil (30B) bereitgestellt ist, und
einen zweiten Vibrationseinschränkungsteil (80), der eine Übertragung von Vibrationen vom zweiten Halteteil (40B) auf das Gehäuse (11) einschränkt, der zwischen dem Gehäuse (11) und dem zweiten Halteteil (40B) bereitgestellt ist, und wobei
der erste Vibrationseinschränkungsteil (70) einen ersten festen Teil (71), der als ein starrer Körper ausgelegt ist und am Gehäuse (11) befestigt ist, und einen ersten elastischen Teil (72), der den ersten festen Teil (71) und den ersten Halteteil (30B) koppelt und eine größere Elastizität als der erste feste Teil (71) hat, aufweist, und
der zweite Vibrationseinschränkungsteil (80) einen zweiten festen Teil (81), der als ein starrer Körper ausgelegt ist und am Gehäuse (11) befestigt ist, und einen zweiten elastischen Teil (82), der den zweiten festen Teil (81) und den zweiten Halteteil (40B) koppelt und eine größere Elastizität als der zweite feste Teil (81) hat, aufweist.

2. Warmwasserrohrhaltestruktur für eine Fahrzeugklimaanlage nach Anspruch 1, wobei
annähernd ein gesamter Umfang des Warmwasserzufuhrrohrs (13) durch den ersten zufuhrseitigen Halteteil (31) und den zweiten zufuhrseitigen Halteteil (41) eingeschlossen ist, und
annähernd ein gesamter Umfang des Warmwassersammelrohrs (14) durch den ersten sammelseitigen Halteteil (32) und den zweiten sammelseitigen Halteteil (42) eingeschlossen ist.

3. Warmwasserrohrhaltestruktur für eine Fahrzeugklimaanlage nach Anspruch 1 oder Anspruch 2, wobei
der Befestigungsteil (23) zwischen dem Warmwasserzufuhrrohr (13) und dem Warmwassersammelrohr (14) bereitgestellt ist.

4. Warmwasserrohrhaltestruktur für eine Fahrzeugklimaanlage nach einem der Ansprüche 1 bis 3, wobei
der erste Halteteil (30B), der erste feste Teil (71) und der erste elastische Teil (72) integral ausgebildet sind, und
der zweite Halteteil (40B), der zweite feste Teil (81) und der zweite elastische Teil (82) integral ausgebildet sind.

5. Warmwasserrohrhaltestruktur für eine Fahrzeugklimaanlage nach einem der Ansprüche 1 bis 4, wobei
das Halterelement (20, 20B) zu einem Wandloch (51a) zeigt, das in der Trennwand (51) geöffnet ist,
einer aus dem ersten Halteteil (30, 30B) und dem zweiten Halteteil (40, 40B) einen herausragenden Teil (43) aufweist, der in Richtung des anderen herausragt und sich in eine Richtung erstreckt, in die sich das Wandloch (51a) erstreckt, und
der andere aus dem ersten Halteteil (30, 30B) und dem zweiten Halteteil (40, 40B) einen eingesenkten Teil (33) aufweist, der den herausragenden Teil (43) bedeckt.

6. Warmwasserrohrhaltestruktur für eine Fahrzeugklimaanlage nach einem der Ansprüche 1 bis 3, wobei
das Halterelement (20, 20B) zu einem Wandloch (51a) zeigt, das in der Trennwand (51) geöffnet ist, und
ein Schallisolationselement (60), das den Schall hindert, den Spalt zu passieren, zwischen dem ersten Halteteil (30, 30B) und dem zweiten Halteteil (40, 40B) positioniert ist.

7. Warmwasserrohrhaltestruktur für eine Fahrzeugklimaanlage nach einem der Ansprüche 1 bis 6, wobei
ein Metall als ein Material von zumindest einem aus dem ersten Halteteil (30, 30B) und dem zweiten Halteteil (40, 40B) verwendet wird.

8. Fahrzeugklimaanlage, umfassend eine Warmwasserrohrhaltestruktur für eine Fahrzeugklimaanlage nach einem der vorhergehenden Ansprüche.

9. Fahrzeug, umfassend eine Fahrzeugklimaanlage nach dem vorhergehenden Anspruch.

## Revendications

1. Structure de support de tuyau d'eau chaude de dispositif de climatisation de véhicule, comprenant :
un boîtier (11), disposé à l'intérieur d'une cabine de véhicule (C) séparée d'un compartiment avant (R) par un tableau de bord (51), dans lequel un espace interne (11a) est formé ;
un radiateur de chauffage (12) qui est disposé dans l'espace interne (11a) et peut chauffer de l'air qui s'écoule dans l'espace interne (11a) ;
un tuyau d'alimentation en eau chaude (13) qui est fourni dans un extérieur du boîtier (11) et peut alimenter en eau chaude le radiateur de chauffage (12) ;
un tuyau de collecte d'eau chaude (14) qui est fourni dans un extérieur du boîtier (11) et peut collecter de l'eau chaude qui est passée à travers un intérieur du radiateur de chauffage (12) ; et
un élément de support (20, 20B) qui supporte le tuyau d'alimentation en eau chaude (13) et le tuyau de collecte d'eau chaude (14), où
l'élément de support (20, 20B) a une première portion de support (30, 30B) qui vient en contact avec le tuyau d'alimentation en eau chaude (13) et le tuyau de collecte d'eau chaude (14), une deuxième portion de support (40, 40B) qui est opposée à la première portion de support (30, 30B), est fournie d'un bout à l'autre d'un espacement, et vient en contact avec le tuyau d'alimentation en eau chaude (13) et le tuyau de collecte d'eau chaude (14), et une portion d'assujettissement (23) qui assujettit la première portion de support (30, 30B) et la deuxième portion de support (40, 40B),
la première portion de support (30, 30B) a une première portion de support côté alimentation (31) qui présente une forme approximativement en U suivant une face périphérique externe du tuyau d'alimentation en eau chaude (13) et supporte le tuyau d'alimentation en eau chaude (13), et une première portion de support côté collecte (32) qui présente une forme approximativement en U suivant une face périphérique externe du tuyau de collecte d'eau chaude (14) et supporte le tuyau de collecte d'eau chaude (14), et
la deuxième portion de support (40, 40B) a une deuxième portion de support côté alimentation (41) qui présente une forme approximativement en U suivant une face périphérique externe du tuyau d'alimentation en eau chaude (13) et supporte le tuyau d'alimentation en eau chaude (13), et une deuxième portion de support côté collecte (42) qui présente une forme approximativement en U suivant une face périphérique externe du tuyau de collecte d'eau chaude (14) et supporte le tuyau de collecte d'eau chaude (14),
**caractérisée en ce que** le dispositif comprend :
une première portion de restriction de vibration (70) qui restreint une transmission de vibration de la première portion de support (30B) au boîtier (11) est fournie entre le boîtier (11) et la première portion de support (30B), et
une deuxième portion de restriction de vibration (80) qui restreint une transmission de vibration de la deuxième portion de support (40B) au boîtier (11) est fournie entre le boîtier (11) et la deuxième portion de support (40B), et où
la première portion de restriction de vibration (70) a une première portion fixe (71) qui est constituée d'un corps rigide et est fixée au boîtier (11), et une première portion élastique (72) qui couple la première portion fixe (71) et la première portion de support (30B) et a une élasticité supérieure à celle de la première portion fixe (71), et
la deuxième portion de restriction de vibration (80) a une deuxième portion fixe (81) qui est constituée d'un corps rigide et est fixée au boîtier (11), et une deuxième portion élastique (82) qui couple la deuxième portion fixe (81) et la deuxième portion de support (40B) et a une élasticité supérieure à celle de la deuxième portion fixe (81).

2. Structure de support de tuyau d'eau chaude de dispositif de climatisation de véhicule selon la revendication 1, où
approximativement une périphérie entière du tuyau d'alimentation en eau chaude (13) est entourée par la première portion de support côté alimentation (31) et la deuxième portion de support côté alimentation (41), et
approximativement une périphérie entière du tuyau de collecte d'eau chaude (14) est entourée par la première portion de support côté collecte (32) et la deuxième portion de support côté collecte (42).

3. Structure de support de tuyau d'eau chaude de dispositif de climatisation de véhicule selon la revendication 1 ou la revendication 2, où
la portion d'assujettissement (23) est fournie entre le tuyau d'alimentation en eau chaude (13) et le tuyau de collecte d'eau chaude (14).

4. Structure de support de tuyau d'eau chaude de dispositif de climatisation de véhicule selon l'une quelconque des revendications 1 à 3, où
la première portion de support (30B), la première portion fixe (71), et la première portion élastique (72) sont formées d'un seul tenant, et
la deuxième portion de support (40B), la deuxième portion fixe (81), et la deuxième portion élastique (82) sont formées d'un seul tenant.

5. Structure de support de tuyau d'eau chaude de dispositif de climatisation de véhicule selon l'une quelconque de la revendication 1 à la revendication 4, où
l'élément de support (20, 20B) fait face à un trou de tableau (51a) ouvert dans le tableau de bord (51), l'une quelconque de la première portion de support (30, 30B) et de la deuxième portion de support (40, 40B) a une portion en saillie (43) qui fait saillie vers l'autre et s'étend dans une direction dans laquelle le trou de tableau (51a) s'étend, et
l'autre portion parmi la première portion de support (30, 30B) et la deuxième portion de support (40, 40B) a une portion évidée (33) qui recouvre la portion en saillie (43) .

6. Structure de support de tuyau d'eau chaude de dispositif de climatisation de véhicule selon l'une quelconque de la revendication 1 à la revendication 3, où
l'élément de support (20, 20B) fait face à un trou de tableau (51a) ouvert dans le tableau de bord (51), et
un élément d'isolation sonore (60) qui restreint le son provenant du passage à travers l'espacement est pris en sandwich par la première portion de support (30, 30B) et la deuxième portion de support (40, 40B).

7. Structure de support de tuyau d'eau chaude de dispositif de climatisation de véhicule selon l'une quelconque de la revendication 1 à la revendication 6, où
un métal est utilisé en tant que matériau d'au moins une portion parmi la première portion de support (30, 30B) et de la deuxième portion de support (40, 40B).

8. Système de climatisation de véhicule comprenant une structure de support de tuyau d'eau chaude de dispositif de climatisation de véhicule selon l'une quelconque des revendications précédentes.

9. Véhicule comprenant un système de climatisation de véhicule selon la revendication précédente.
